# EUROPEAN PATENT APPLICATION

(11) **EP 0 691 788 A1**
(43) Date of publication of application: **10.01.1996**
(21) Application number: 95112599.6
(22) Date of filing: 24.03.1993
(51) Int. Cl.: H04N 5/92, H04N 9/80

(54) **Variable length code recording/playback apparatus**

(30) Priority: 24.03.1992 JP 66370/92; 24.03.1992 JP 66369/92; 25.03.1992 JP 67609/92; 25.03.1992 JP 67611/92
(62) Divisional of application: 93302250.1
(71) Applicant: KABUSHIKI KAISHA TOSHIBA, Kawasaki-shi, Kanagawa-ken 210, Tokyo (JP); TOSHIBA AVE CO., LTD, Minato-ku, Tokyo 105 (JP)
(72) Inventor: Shimoda, Kenji, c/o Intellectual Property Division, Minato-ku, Tokyo (JP); Abe, Shuji, c/o Intellectual Property Division, Minato-ku, Tokyo (JP)
(74) Representative: O'Connell, David Christopher

(57) **Abstract**

There is disclosed a variable length code recording apparatus, in which input video data are compressed in two stages, with a low compression ratio and a high compression ratio, and wherein a decision is taken, for each location on the recording medium, whether the storage data are to be data compressed with a high compression ratio or data compressed with a low compression ratio.

Corresponding playback means are also disclosed.

## Description

The present invention relates generally to a variable length code recording/playback apparatus, and more particularly, to a variable length code recording/playback apparatus, which is capable of maintaining a predetermined picture quality for a plurality of specialized mode playback.

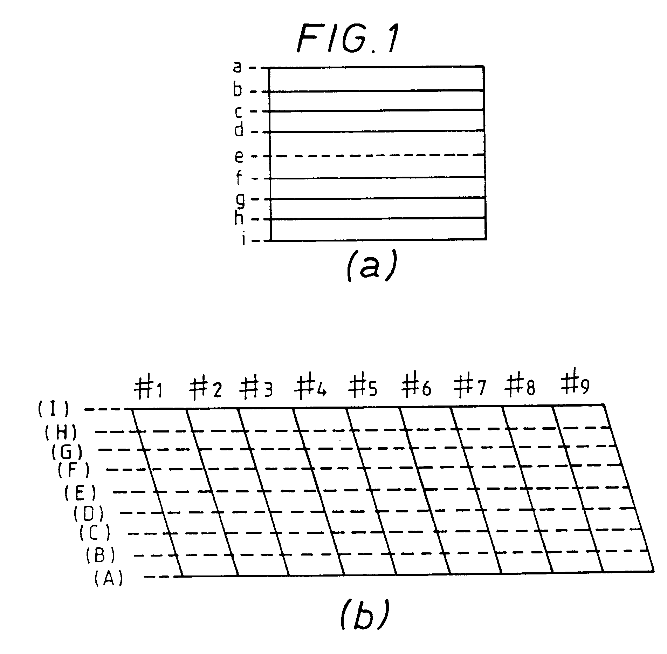

A digital precessing of video data has been greatly progressed in recent years. In particular, various systems for recording digital video data on a magnetic video cassette recorder (VCR) have been progressed. FIGURE 1 is a diagram for explaining relations of the locations on a screen and the locations on the recording tracks of a recording medium in VCRs. FIGURE 1(a) illustrates the locations on the screen and FIGURE 1(b) illustrates the locations on the recording tracks.

FIGURE 1(a) shows one frame of picture vertically divided into eight sections. FIGURE 1(b) illustrates the record locations of the first through ninth tracks similarly divided into eight tracks. Video data are sequentially recorded on a recording medium starting from the lowest line A of the first track to its top line I, For instance, when recording one frame data on one track, data displayed in a horizontal section defined by lines a and b on a screen are recorded on a longitudinal section defined by lines A and B on a recording medium, and thereafter, in the similar manner data displayed in horizontal sections defined by lines b through i on the screen are sequentially recorded on longitudinal sections defined by lines B through I on the recording medium. Further, for instance, when recording one frame data on two tracks, data in the horizontal section defined by the lines a and e on the screen are recorded on the longitudinal section defined by the lines A and I of the first track #1 while data in the horizontal section defined by the lines e and i on the screen are recorded on the longitudinal section defined by the lines A and I of the second track #2.

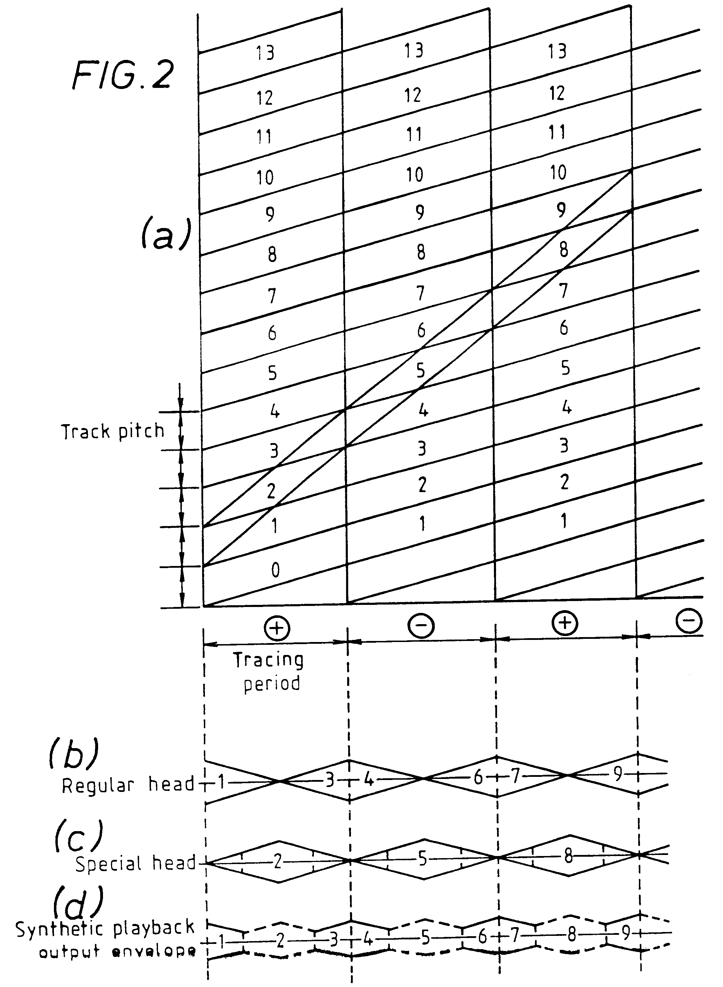

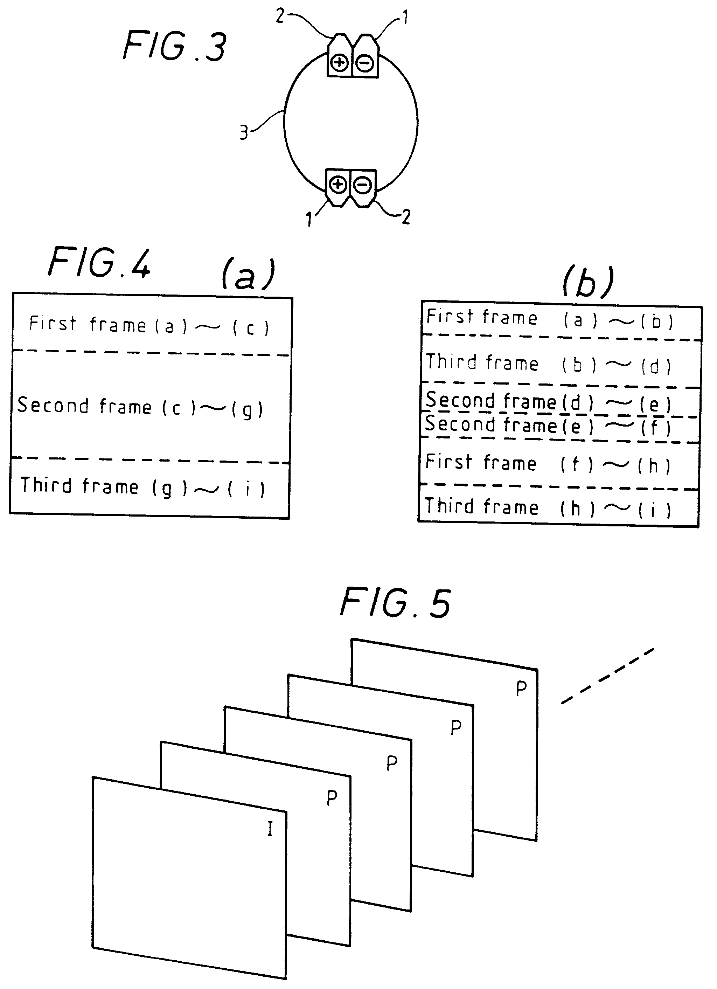

FIGURE 2 is an explanatory diagram showing the relationship between trace patterns and playback signal envelopes at the triple-speed mode playback. FIGURE 2(a) shows trace patterns at the triple-speed mode playback with a tracing period shown at the axis of abscissas and track pitch or tape traveling distance at the axis of ordinates. The signs "+" and "-" in the diagram represent the regular azimuths of the playback head, respectively. Further, numerals in the diagram show track numbers; odd number tracks are in the plus azimuth and even number tracks are in the minus azimuth. FIGURES 2(b) through 2(d) illustrate the signal envelope played back by the regular head, the playback output envelope by the special head and the synthetic playback output envelope obtained by both heads. FIGURE 3 is an explanatory diagram showing the construction of the recording/playback heads.

Now assumed that a rotary cylinder 3, as shown in FIGURE 3, is used in the data recording and playback operations. The rotary cylinder 3 is provided with a pair of the regular heads 1 which have mutually different azimuths and a pair of the special heads 2 which have mutually different azimuths, and the azimuths of the regular head 1 and its adjacent special head 2 also differ each other. As shown by the sign "+" in FIGURE 2(a), the first track and the third track are traced by the regular head 1 of the plus azimuth in the initial tracing period, and the fourth track and the sixth track are traced by the regular head 1 of the minus azimuth in the next tracing period. Thus, the playback signal envelope shown in FIGURE 2(b) is obtained by the regular head 1. Further, the second track is traced by the special head 2 in the initial tracing period and the playback signal envelope shown in FIGURE 2(c) is obtained in the same manner. By combining the playback output from the regular head 1 with the playback output from the special head 2, the synthetic playback output envelope shown in FIGURE 2(d) is obtained.

The table 1 shown below represents relations among the playback outputs at the triple-speed mode playback (FIGURE 2(d)), the tracing locations and the locations on the screen.

**Table 1**

| Playback Track | 1 Frame/1 Track | | 1 Frame/2 Tracks | |
|---|---|---|---|---|
| | Track | Frame | Track | Frame |
| | #1 | 1st Frame | #1 | 1st Frame |
| 1 | (A) - (C) | (a) - (c) | (A) - (C) | (a) - (b) |
| | #2 | 2nd Frame | #2 | 1st Frame |
| 2 | (C) - (G) | (c) - (g) | (C) - (G) | (f) - (h) |
| | #3 | 3rd Frame | #3 | 2nd Frame |
| 3 | (G) - (I) | (g) - (i) | (G) - (I) | (d) - (e) |
| | #4 | 4th Frame | #4 | 2nd Frame |
| 4 | (A) - (C) | (a) - (c) | (A) - (C) | (e) - (f) |
| | #5 | 5th Frame | #5 | 3rd Frame |
| 5 | (C) - (G) | (c) - (g) | (C) - (G) | (b) - (d) |
| | #6 | 6th Frame | #6 | 3rd Frame |
| 6 | (G) - (I) | (g) - (i) | (G) - (I) | (h) - (j) |
| | #7 | 7th Frame | #7 | 4th Frame |
| 7 | (A) - (C) | (a) - (c) | (A) - (C) | (a) - (b) |
| | #8 | 8th Frame | #8 | 4th Frame |
| 8 | (C) - (G) | (c) - (g) | (C) - (G) | (f) - (h) |
| | #9 | 9th Frame | #9 | 5th Frame |
| 9 | (G) - (I) | (g) - (i) | (G) - (I) | (a) - (b) |

As shown in FIGURE 2(d) and Table 1, data A through C on the first track #1 are reproduced by the regular head 1 in the first 1/4 time interval in the initial tracing period, data of C through G on the second track #2 are reproduced by the special head 2 in the next 1/2 time, and data of G through I on the third track are reproduced by the regular head ! in the next 1/4 time. Thereafter, data on three tracks are reproduced in the similar manner in one tracing period.

When one frame video data are recorded on one track, the locations of A through C on the first track #1 correspond to the locations a through c on the first frame of image, the locations C through G on the second track #2 correspond to the locations c through g on the second frame of the frame, and the locations G through 1 on the third track #3 correspond to the locations g through i on the third frame of the image, as shown in Table 1. Therefore, at the triple-speed mode playback, the picture patterns at the locations on the first through the third frames are combined and displayed as a playback picture, as shown in FIGURE 4(a).

Further, when one frame video data are recorded on two tracks, the locations A through C on the first track #1 correspond to the locations a and b on the first frame, the locations C through G on the second track #2 correspond to the locations f through h on the first frame, and the locations G through I on the third track #3 correspond to the locations d through e on the second frame as shown in Table 1. Further, the locations A through C on the fourth track #4 correspond to the locations e and f on the second frame, the locations C through G on the fifth track #5 correspond to the locations b through d on the third frame, and the locations G through I on the sixth track #6 correspond to the locations h through i on the third frame. In this case, therefore, the picture patterns at the locations on the first through the third frames are presented in mix on the playback picture, as shown in FIGURE 4(b).

By the way, various proposals have been proposed in recent years for the standardization of high efficient encoding for compressing video data. The high efficient encoding technique is to encode video data at more lower bit rate for improving efficiency of digital transmission and recording. For instance, the CCITT (Comite Consultatif international Telegraphique et Telephonique or International Telegraph and Telephone Consultative Committee) has issued a recommendation for video-conference/video-telephone standardization H.261. According to the CCITT recommendation, the encoding is made by using the frame I processed an intra-frame compression and the frame P processed an inter-frame compression (or a predictive frame compression).

FIGURE 5 is an explanatory diagram for explaining the video data compression according to the CCITT recommendation.

The frame I processed intra-frame compression is the one frame video data encoded by the DCT (Digital Cosine Transformation) process. The inter-frame compression processed frame P is the video data encoded by the predictive encoding method using the intra-frame compression processed frame I or the inter-frame compression processed frame P. In addition, more reduction of bit rate has been made by encoding these encoded data to the data encoded in variable length code data. As the intra-frame compression processed frame I was encoded by the intra-frame information only, it is possible to decode the intra-frame compression processed frame I by a single encoded data only. On the other hand, however, the inter-frame compression processed frame P was encoded using correlations to other video data, thus the inter-frame compression processed frame P being impossible to decode by a single encoded data only.

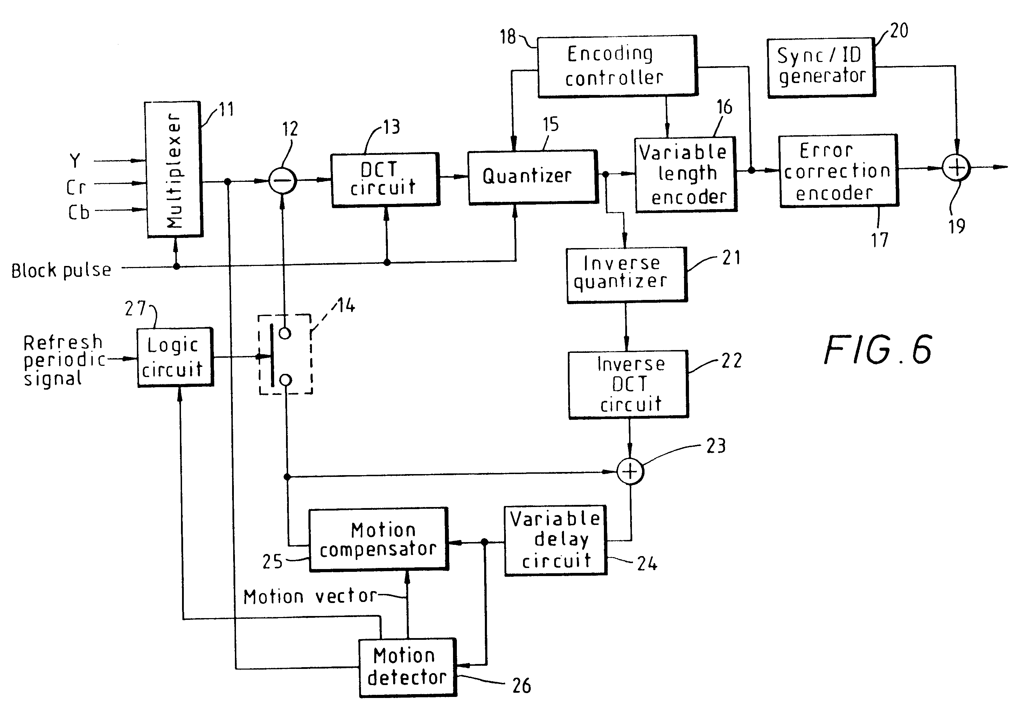

FIGURE 6 is a block diagram showing the recording section of a conventional recording/playback apparatus for variable length code using such the predictive encoding.

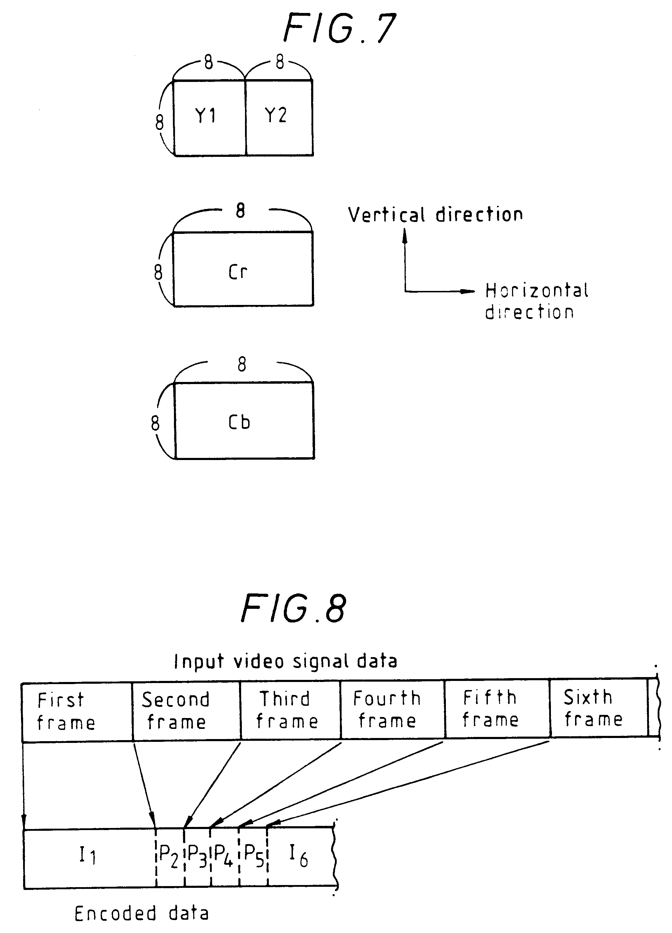

The luminance signal Y and the color difference signals Cr and Cb are applied to a multiplexer 11, where they are multiplexed in block of 8 pixels x 8 horizontal tracing lines. Sampling rate of the color difference signals Cr and Cb in the horizontal direction is a half (1/2) of the luminance signal Y. Therefore, in the period when two 8 x 8 luminance blocks are sampled, one 8 x 8 block of the color difference signals Cr and Cb is sampled. As shown in FIGURE 7, two luminance signal blocks Y and each of the color difference signal blocks Cr and Cb total, thus four blocks in total forms a macro block. Here, two luminance signal blocks Y and each of the color difference blocks Cr and Cb represent the same location of the picture frame. The output of the multiplexer 11 is applied to a DCT circuit 13 through a subtracter 12.

When performing the intra-frame compression, a switch 14 is kept OFF and the output of the multiplexer 11 is input directly to the DCT circuit 13 as described later. A signal composed of 8 x 8 pixels per block is applied to the DCT circuit 13. The DCT circuit 13 converts the input signal into frequency components by the 8 x 8 two dimensional DCT (Digital Cosine Transformation) process. This makes it possible to reduce the spatial correlative components. The output of the DCT circuit 13 is applied to a quantizer 15 which lowers one block signal redundancy by requantizing the DCT output using a fixed quantization coefficient. Further, block pulses are supplied to the multiplexer 11, the DCT circuit 13, the quantizer 15, etc. which operate in unit of block.

The quantized data from the quantizer 15 is applied to a variable length encoder 16 and is, for instance encoded to the Huffman codes based on the result calculated from the statistical encoding quantity of the quantized output. As a result, a short time sequence of bits is assigned to data having a high appearance probability and a long time sequence of bits to data having a low appearance probability and thus, transmission quantity is further reduced. The output of the variable length encoder 16 is applied to an error correction encoder 17, which provides the output from the variable length encoder 16 with an error correction parity added to a multiplexer 19.

The output of the variable length encoder 16 is also applied to an encoding controller 18. The amount of the output data varies largely depending on input picture. So, the encoding controller 18 monitors the amount of the output data from the variable length encoder 16 and regulates the amount of the output data by controlling the quantization coefficient of the quantizer 15. Further, the encoding controller 18 may restrict the amount of the output data by controlling the variable length encoder 16.

On the other hand, a sync/ID generator 20 generates frame a sync signal and ID signal showing data contents and additional information and provides them to the multiplexer 19. The multiplexer 19 forms one sync block data with a sync signal, an ID signal, a compressed signal data and a parity and provides these data to a recording encoder (not shown). The recording encoder, after recording/encoding the output from the multiplexer 19 according to characteristic of a recording medium, records the encoded data on a recording medium (not shown).

On the other hand, if the switch 14 is ON, the current frame signal from the multiplexer 11 is subtracted from the motion compensated preceding frame, data which will be described later, in the subtracter 12 and applied to the DCT circuit 13. That is, in this case the inter-frame encoding is carried out to encode differential data using a redundancy of the inter-frame picture. When a difference between the preceding frame and the current frame is simply obtained in the inter-frame encoding, it will become large if there is any motion in the picture. So, the difference is made small by compensating the motion by obtaining a difference at the pixel location corresponding to the motion vector while detecting the motion vector by obtaining the location of the preceding frame corresponding to the prescribed location of the current frame.

That is, the output of the quantizer 15 is also applied to an inverse quantizer 21. This quantized output is inverse-quantized in the inverse quantizer 21 and further, inverse DCT processed in an inverse DCT circuit 22 and restored to the original video signal. Further, the original information cannot be played back completely in the DCT processing, requantization, inverse quantization and inverse DCT processing and part of the information lacks. In this case, as the output of the subtracter 12 is a differential information, the output of the inverse DCT circuit 22 is also a differential information. The output of the inverse DCT circuit 22 is applied to an adder 23. This output from the adder 23 is fed back through a variable delay circuit 24 which delays signals by about one frame period and a motion compensator 25, and the adder 23 reproduces the current frame data by adding differential data to the preceding frame data and provides them to the variable delay circuit 24.

The preceding frame data from the variable delay circuit 24 and the current frame data from the multiplexer 11 are applied to a motion detector 26 where motion vector is detected. The motion detector 26 obtains motion vector through a full search motion detection by, for instance, a matching calculation. In the full search type motion detection, the current frame is divided into the prescribed number of blocks and the search range of, for instance, 15 horizontal pixels x 8 vertical pixels are set for each block. In the search range corresponding to the preceding frame, the matching calculation is carried out for each block and an inter-pattern approximation is calculated. Then, by calculating the preceding frame block which provides the minimum distortion in the search range, the vector which is obtained by this block and the current frame block is detected as the motion vector. The motion detector 26 provides the motion vector thus obtained to the motion compensator 25.

The motion compensator 25 extracts a corresponding block data from the variable delay circuit 24, compensates it according to the motion vector and provides it to the subtracter 12 through the switch 14 and also, to the adder 23 after making the time adjustment. Thus, the motion compensated preceding frame data is supplied from the motion compensator 25 to the subtracter 12 through the switch 14 and when the switch 14 is ON, the inter-frame compression mode results and if the switch 14 is OFF, the intra-frame compression mode results.

The switch 14 is turned ON/OFF based on a motion signal. That is, the motion detector 26 generates the motion signal depending on whether the motion vector size is in excess of a prescribed threshold value and outputs it to a logic circuit 27. The logic circuit 27 controls the ON/OFF of the switch 14 by the logical judgment using the motion signal and a refresh periodic signal. The refresh periodic signal is a signal showing the intra-frame compression processed frame I shown in FIGURE 5. If the input of the intra-frame compression processed frame I is represented by the refresh periodic signal, the logic circuit 27 turns the switch 14 OFF irrespective of the motion signal. Further, if the motion signal represents that the motion is relatively fast and the minimum distortion by the matching calculation exceeds the threshold value, the logic circuit 27 turns the switch 14 OFF and the intra-frame encoding is carried out for each block even when the inter-frame compression processed frame P data are input. Table 2 shown below represents the ON/OFF control of the switch 14 by the logic circuit 27.

**Table 2**

| | | | |
|---|---|---|---|
| Frame I | Intra-Frame Compression Processed Frame | Switch 14 OFF | |
| Frame P | Motion Vector Detected Inter-Frame Compression Processed Frame | Switch 14 ON | |
| | Motion Vector Unknown Inter-Frame Compression Processed Frame | Switch 14 OFF | |

FIGURE 8 is an explanatory diagram showing the data stream of record signals which are output from the multiplexer 19.

As shown in FIGURE 8, the first and the sixth frames of the input video signal are converted to intra-frames I1 and I6, respectively, while the second through the fifth frames are converted to inter-frame compression processed frames P2 through P5. The ratio of data quantity between the intra-frame compression processed frame I and the inter-frame compression processed frame P is (3 - 10) : 1. The amount of data of the intra-frame compression processed frame I is relatively large, while the amount of data of the inter-frame compression processed frame P is extremely reduced. Further, the data of the inter-frame compression processed frame P cannot be decoded unless other frame data are decoded.

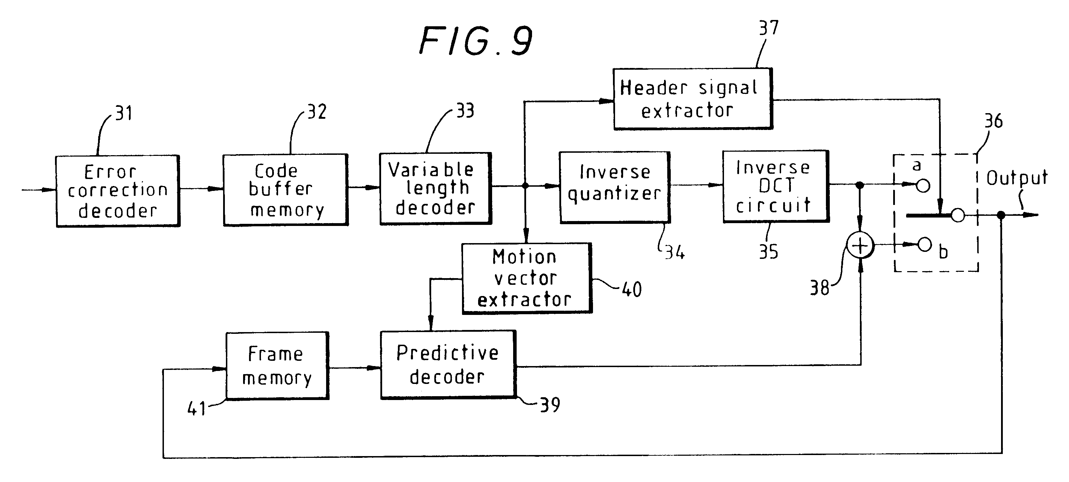

FIGURE 9 is a block diagram illustrating the decoding section (playback section) of a conventional variable length code recording/playback apparatus.

Compressed encoded data recorded on a recording medium is played back by the playback head (not shown) and then input into an error correction decoder 31. The error correction decoder 31 corrects errors produced in a data transmission and a data recording. The playback data from the error correction decoder 31 are applied to a variable length data decoder 33 through a code buffer memory 32 and decoded to prescribed length data. Further, the code buffer memory 32 may be omitted.

The output from the variable length decoder 33 is processed an inverse-quantization in an inverse quantizer 34, and then decoded by an inverse-DCT operation in an inverse DCT circuit 35. The decoded data is then applied to the terminal a of a switch 36. On the other hand, the output of the variable length decoder 33 is also applied to a header signal extractor 37. The header signal extractor 37 retrieves a header showing whether the input data is the intra-frame compression data (intra-frame data) or the inter-frame compression data (inter-frame data) and then provides the header to the switch 36. When supplied with the header shown the intra-frame compression data, the switch 36 selects the terminal a of the switch 36 and thus outputs decoded data from the inverse DCT circuit 35.

The inter-frame compression data is obtained by adding the output from the inverse DCT circuit 35 and the preceding frame output from a predictive decoder 39 using an adder 38. That is, the output of the variable length decoder 33 is applied to a motion vector extractor 40 for obtaining a motion vector. This motion vector is applied to the predictive decoder 39. On the other hand, the decoded output from the switch 36 is delayed for one frame period by a frame memory 41. The predictive decoder 39 compensates the preceding frame decoded data from the frame memory 41 according to the motion vector and provides them to the adder 38. The adder 38 outputs a inter-frame compression data to the terminal b of the switch 36 by adding the output from the predictive decoder 39 and the output from the inverse DCT circuit 35. When the inter-frame compression data is applied, the switch 36 selects the terminal b by the header and thus outputs the decoded data from the adder 38. Accordingly, the compression and expansion are carried out without delay in both of the intra-frame compression mode and the inter-frame compression mode.

However, the intra-frame compression processed frame I and the inter-frame compression processed frame P differ each other in their encoded quantities. If the data stream shown in FIGURE 8 is recorded on a recording medium, one frame is not necessarily able to playback by the playback data at the triple-speed mode playback. Further, the inter-frame compression processed frame P processed by the inter-frame compression will become not able to playback when any undecoded frame is generated as in the triple-speed mode playback, because inter-frame compression processed frame P cannot be decoded as an independent frame.

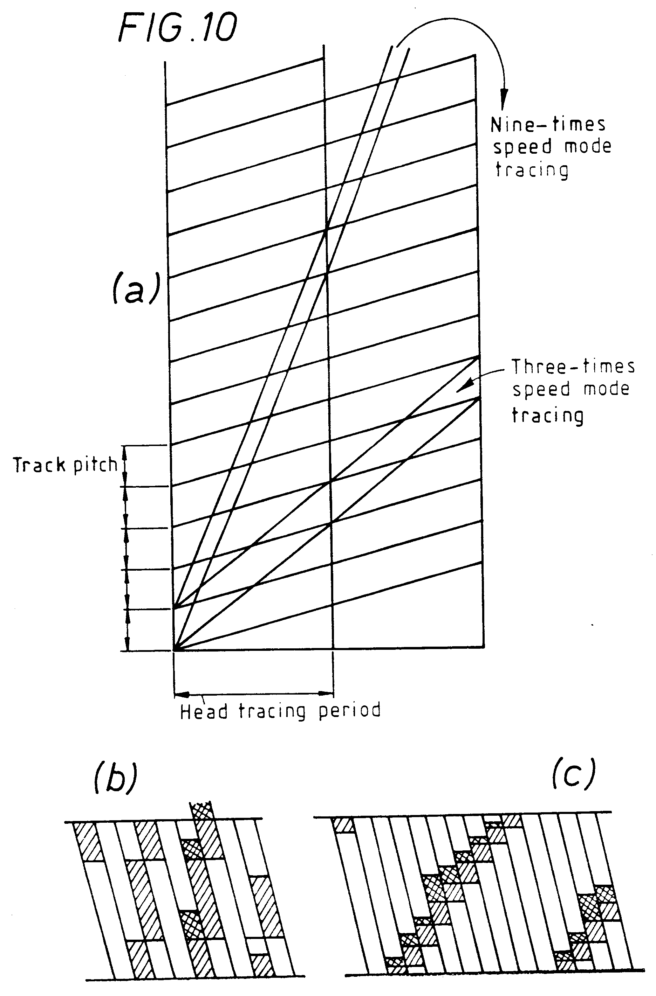

To solve the problems, the applicant of the present application has proposed a method to arrange important data by concentrating them in the Japanese Patent Application (TOKU-GAN-HEI) P02-11745. FIGURE 10 is an explanatory diagram for explaining the method. FIGURE 10(a) shows a trace patterns at a triple-speed mode playback and a nine-times speed mode playback. FIGURE 10(b) shows the recorded state on a tape at the triple-speed mode playback. And FIGURE 10(c) shows the recorded state on a tape at the nine-times speed mode playback. In these diagrams, the hatched sections are the areas to be played back at the triple-speed mode playback (hereinafter referred to as the specific arrange areas).

In this proposal, important data are arranged in the hatched sections shown in FIGURE 10(b) at the triple-speed mode playback, while important data are arranged in the hatched sections shown in FIGURE 10(c) at the nine-times speed mode playback. These hatched sections are the areas which are played back at the triple-speed mode playback and the nine-times speed mode playback, respectively. Further, if the intra-frame data are adopted as important data, they are recorded not only in the specific arrange area but also in other section (the meshed section).

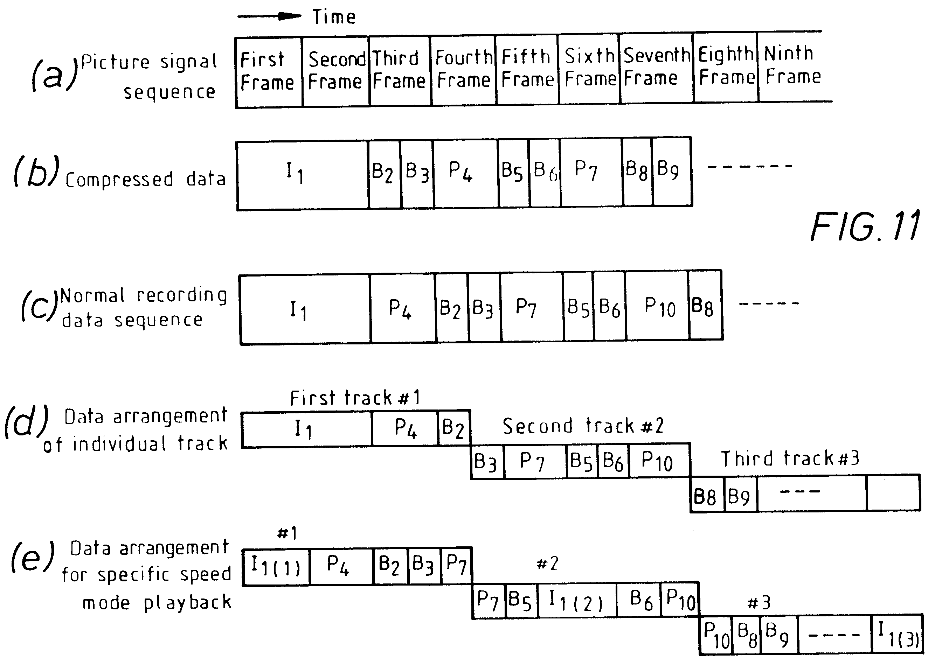

FIGURE 11 is an explanatory diagram for explaining the video data.

Video data are compressed by the compression method presented by the MPEG (Moving Picture Experts Group). Further, for a video telephone/conference, 64 Kbps x n times rate H.261 has been presented and also the still picture compression method has been presented by the JPEG. The MPEG is for semi-moving pictures so that the transmission rate is 1.2 Mbps as adopted for CD-ROM, etc. In the MPEG, data of the first frame, the second frame ..... shown in FIGURE 11(a) are converted to the intra-frame I1, the inter-frame data B2, the inter-frame B3, the inter-frame data P4 ....., as shown in FIGURE 11(b), respectively. Thus, the respective frame data are compressed at different compression rate.

Data shown in FIGURE 11(b) are changed their order in order to facilitate their decoding. That is, as the inter-frame B can be decoded by decoding the inter-frame P, at a recording on a recording medium, the data are supplied to a recording medium or a transmission line after changed in the order of the intra-frame I1, the inter-frame P4, the inter-frame B2, the inter-frame B3 ..... and so on.

In the normal recording, the data shown in FIGURE 11(c) are sequentially recorded on a recording medium. FIGURE 11(d) shows the state of this recording. On the contrary, in the method, the data arrangement is changed as shown in FIGURE 11(e) to make a specific speed mode playback possible. For instance, to make the triple-speed mode playback possible, the intra-frame I data are recorded by dividing into the leading end I1(1) of the first track #1, the center I1(2) of the second track #2 and the trailing end I1(3) of the third track #3. Thus, when the hatched sections shown in FIGURE 10(b) are played back, the intra-frame I data are played back.

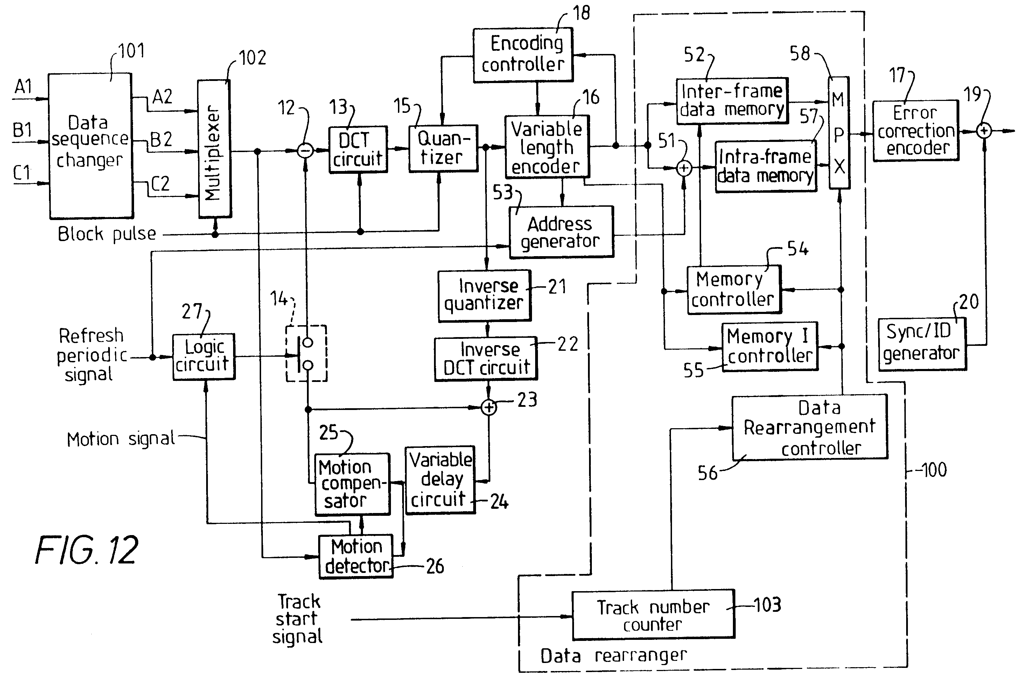

FIGURE 12 is a block diagram showing the construction of the proposed method. The same elements in FIGURE 12 as those in FIGURE 6 are assigned with the same reference numerals and their explanations will be omitted.

A data sequence changer 101 changes the time sequence of input signals A1, B1 and C1 and outputs signals A2, B2 and C2 to a multiplexer 102. The data or the intra-frame I and the inter-frames P and B are given as the input signals A1, B1 and C1. These frame data are composed of the luminance signal Y and color difference signals Cr and Cb, and the multiplexer 102 multiplexes the signals Y, Cr and Cb in time sequence and outputs therefrom.

The output of a variable length encoder 16 is given to an address generator 53 and a data rearranger 100 shown by the broken-line block in addition to a variable length controller 18. The data rearranger 100 is provided for recording important data (in this case, the intra-frame data) on the prescribed location on a tape shown by the oblique line in FIGURE 10. That is, the output of the variable length encoder 16 is separated into the intra-frame data and the inter-frame data, and the inter-frame data are controlled by a memory controller 54 and stored in an inter-frame data memory 52. The address generator 53 generates address showing the correspondence of the output of a variable length encoder 26 and the frame location, and an adder 51 adds the address to the intra-frame data from the variable length encoder 16. An intra-frame data memory 57 is controlled by a memory I controller 55 and stores the output of the adder 51. Further, the adder 51 may add an address to the inter-frame data.

The memory controller 54 and the memory I controller 55 are given with encoding process information from the variable length encoder 16, respectively, and control the write into the inter-frame data memory 52 and the intra-frame data memory 57. On the other hand, when reading from the data memories 52 and 57, the data rearrangement controller 56 rearranges data to obtain a data stream, as shown in FIGURE 11(e), by controlling the memory controller 54, the memory I controller 55 and a multiplexer (hereinafter referred to as MPX) 58. That is, a track number counter 103 is given with a track start signal, for instance, a head switching pulse directing the head switching, etc., and grasping the recording track number, outputs it to the data rearrangement controller 56. For instance, when corresponding to the triple-speed mode playback, the track number counter 103 outputs track numbers #1, #2, and #3 indicating three types of continuous recording tracks in time sequence repeatedly. The data rearrangement controller 56 decides an arrangement of the intra-frame data out of the data from the MPX 58 based on the output from the track number counter 103. For instance, when making the triple-speed mode playback possible, if data indicating the track #1 is given, the data rearrangement controller 56 arranges the outputs from the intra-frame data memory 57 so as to record them on the leading end of the recording track. Similarly, if data indicating the tracks #2 and #3 are given, it arranges the outputs from the intra-frame data memory 57 so as to record them at the center and the trailing end of the recording track.

Thus, the MPX 58, under the control by the data rearrangement controller 56, multiplexes the intra-frame data and outputs them to an error correction encoder 17. The error correction endoder 17 outputs the multiplexed intra-frame data with an error correction parity added to a multiplexer 19. A sync/ID generator 20 generates a sync signal and an ID signal and then output them to the multiplexer 19, which in turn outputs them by adding them to the output of the MPX 58. The output of the multiplexer 19 is recorded on a recording medium through the recording head (not shown).

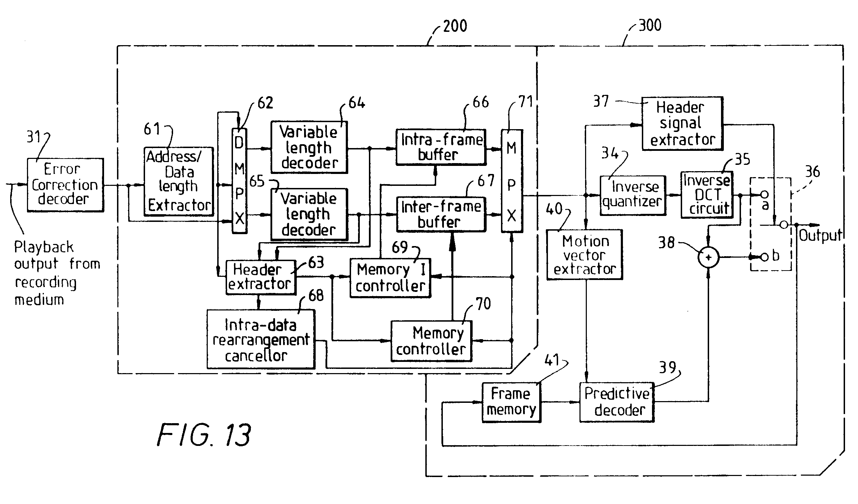

On the other hand, FIGURE 13 is a block diagram showing the playback section. The same elements in FIGURE 13 as those in FIGURE 9 are assigned with the same reference numerals and their explanations will be omitted.

In the playback section, the same decoding operation as that in FIGURE 9 is basically carried out. However, as data have been rearranged at the recording operation, the process to return the data to the original arrangement is added. That is, the playback output from a recording medium (not shown) is demodulated and the error correction is made in an error correction decoder 31 and is then given to an address and data length extractor 61 and a DMPX 62. As the intra-frame data is recorded on the prescribed location on a recording medium according to a prescribed playback speed, it is possible to reproduce the intra-frame by performing the playback at the prescribed playback speed.

The address and data length extractor 61 extracts the address and the data length of the intra-frame data. The DMPX 62 is controlled based on the data length from the address and data length extractor 61 and separating the intra-frame data and the inter-frame data, outputs them to variable length decoders 64 and 65, respectively. The variable length decoders 64 and 65 decode the input data to prescribed length data and output them to an intra-frame buffer 66 and an inter-frame buffer 67, respectively.

On the other band, decoded data of the variable length decoders 64 and 65 are also given to a header extractor 63. The header extractor 63 is also given with the output from the address and data length extractor 61 and by generating a signal indicating to restore the time series, outputs it to a memory I controller 69, a memory controller 70 and an intra-frame data rearrangement canceller 68. The intra-frame data rearrangement canceller 68 controls the memory I controller 69, the memory controller 70 and an MPX 71 based on the indicating signal and the header information. Then, the memory I controller 69 and the memory controller 70 control the read/write of the intra-frame buffer 66 and the inter-frame buffer 67, respectively, and then output the intra-frame and the inter-frame data converted to prescribed length data to the MPX 71. The MPX 71 restores the data sequence to the original data sequence before the rearrangment operation and then outputs the data sequence to a circuit block 300 encircled with the broken line. The operation in the block 300 is the same as the process after the reverse quantization process and the decoded output is output from a switch 36.

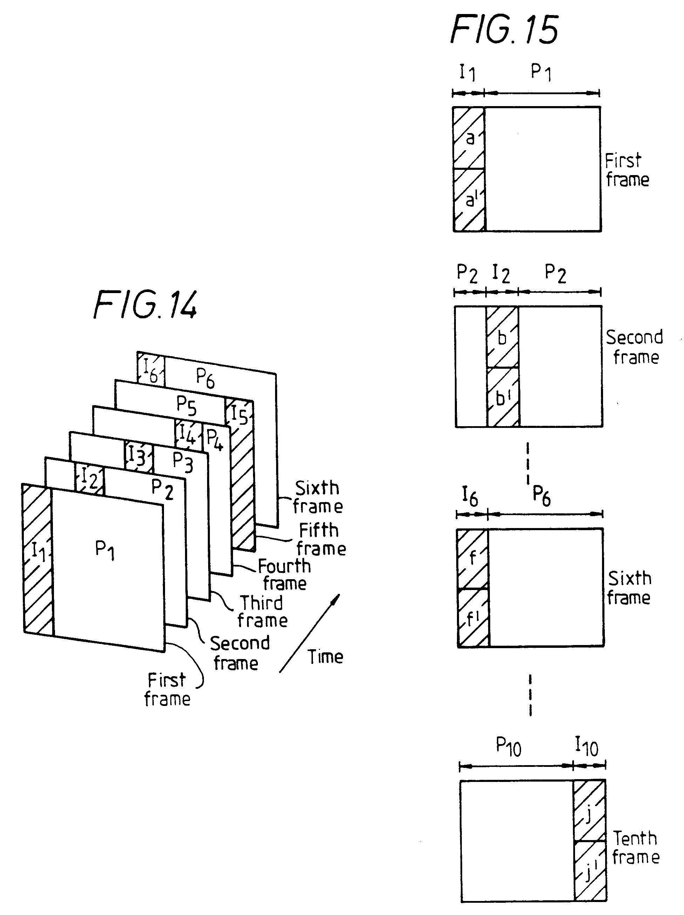

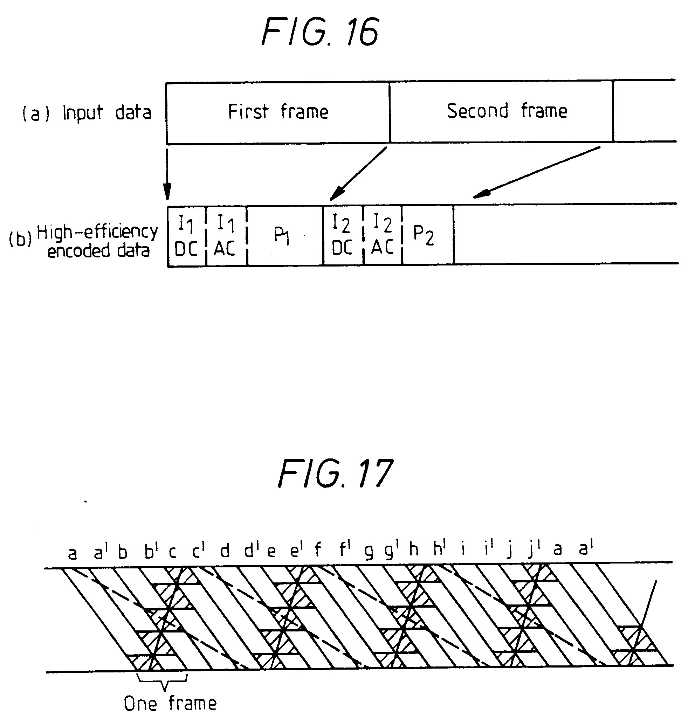

FIGURE 14 is an explanatory diagram for explaining one example of data to be recorded in the specific arrangement area. Further, FIGURE 15 shows the correspondence of the data with the pictures as shown in FIGURE 14, and FIGURE 16 shows a data stream when the data, as shown in FIGURE 14, are encoded efficiently.

As shown by the hatched sections in FIGURE 14, the intra-frame I is divided into five sections and these divided frame sections I1 through I5 are arranged in the prescribed area of the inter-frame P. Data I1 through I5 correspond to each one of five vertically divided sections, respectively. Now, dividing a frame into two sections vertically and five sections horizontally, the upper areas are assumed to be a(f), b(g), c(h), d(j) and e(j), the lower areas to be a'(f'), b'(g'), c'(h'), d'(i') and e'(j'), and the ten frames are assumed to be one set. Then, as shown in FIGURE 15, the data I1 corresponds to the areas a and a', and the data I2 corresponds to the areas b and b'. Similarly, the data I3 through I10 correspond to the areas c, c' through j, j' on the frame, respectively.

In the first frame, the data I1 of the intra-frame I and the data P1 of the inter-frame P are arranged, while in the second frame the data I2 of the intra-frame I is arranged between the respective inter-frames P2. Similarly, in the third and the fourth frames, the data I3 and I4 of the intra-frame I are arranged between the inter-frames P3s and P4, respectively. Similarly in the fifth frame, the inter-frame P5 and the intra-frame I5 are arranged.

When these data are high efficiently encoded, as shown in FIGURES 16(a) and 16(b), each of the frames is composed of a DC component and an AC component of the intra-frame data and the inter-frame data. Further, the data stream is rearranged so that the intra-frame data are recorded in a specific arrangement area on a recording medium.

Now, when a five-times speed mode playback is made possible, a specific arrangement area will be arranged as shown by the hatched sections in FIGURE 17. If one frame data is to be recorded on two tracks, the intra-frame data I1 is recorded in the specific arrangment areas of the first and the second tracks. That is, as shown in FIGURE 17, the data corresponding to the areas a, a', b, b', c, c', d, d' ..... of the frame are recorded, respectively.

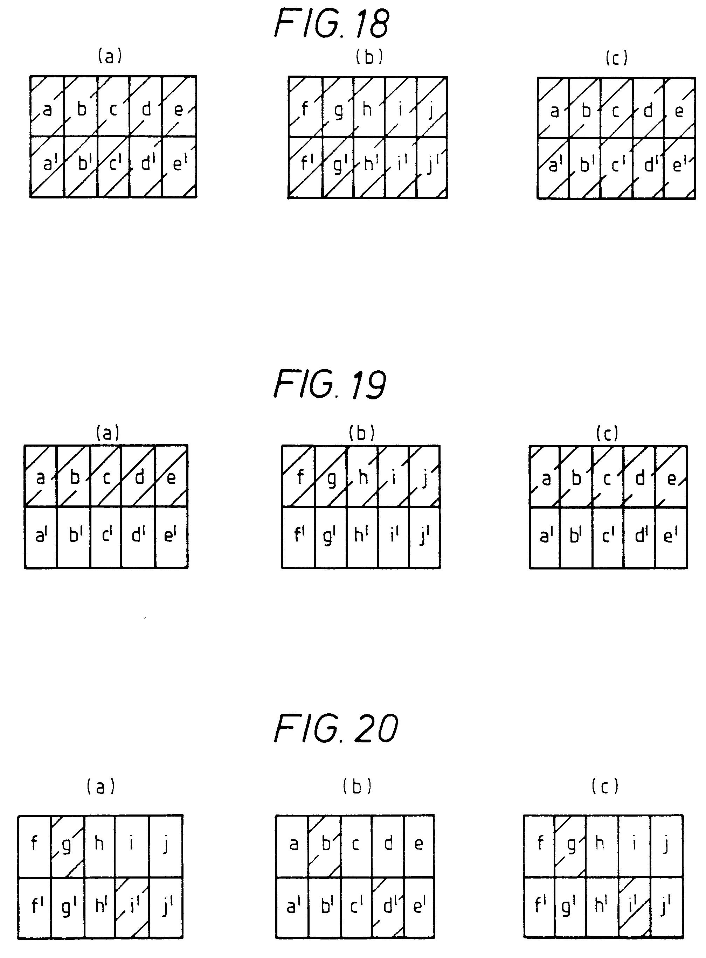

Therefore, at the five-times speed mode playback, the data corresponding to the frame areas a, a', b, b', c, c' ..... are played back successively and one frame is constructed by two tracings, as shown in FIGURE 18(a). In the next two tracings, the data corresponding to the frame areas f, f', g, g', ..... j, j' are played back successively to form n frames, as shown in FIGURE 18(b). In the next two tracings, one frame is constructed by the data corresponding to the frame areas a, a', ..... e, e', as shown in FIGURE 18(c).

As described above, the playback section shown in FIGURES 12 and 13 obtains a playback picture by playing back at least intra-frame data at a specific speed mode playback. However, there was a problem in that good quality playback pictures couldn't be obtained in reverse direction playbacks. FIGURES 19 and 20 are explanatory diagrams for explaining the problem. FIGURES 19a), 19(b) and 19(c) show constructions of frames played back at a double-speed mode playback, while and FIGURES 20(a), 20(b) and 20(c) show constructions of frames played back at a five-times speed mode playback.

As shown in FIGURES 19(a), 19(b) and 19(c), at the double-speed mode playback the data recorded on two tracks are played back by one tracing and therefore, only one of two adjacent tracks is played back. For instance, as shown by the oblique lines in FIGURE 19(a), if the data corresponding to the frame area a is first played back, the data corresponding to the area b is played back in the next tracing. Therefore, in the next five tracings only data in the areas a through e corresponding to the upper portion of the frame are played back. Further, in the next five tracings only data in the areas f through j corresponding to the upper portion of the frame are played back as shown in FIGURE 19(b) and in the next five tracings only data in the areas a through c are played back, as shown in FIGURE 19(c).

Further, if a reverse direction five-times speed mode playback will be executed, the tracing direction of the magnetic head is as shown by the broken line in FIGURE 17 and the playback is carried out in the order reverse to that at the time of recording. For instance, when the data corresponding to the area i' is played back in the first tracing, the data corresponding to the area b is played back in the next tracing. That is, as shown by the oblique lines in FIGURE 20(a), only data in the frame areas g and i' are played back in two tracings. Further, in the next two tracings, as shown in FIGURE 20(b), only data corresponding to the areas d' and b are played back and in the next two tracings, as shown in FIGURE 20(c), only data corresponding to the areas i' and g are played back. Thus, there was the problem in that at the playbacks other than the normal speed mode playback and the five-times speed mode playback, only part of the frame was played back and no good quality playback picture could be obtained.

Thus, conventional variable length code recording/playback apparatus, as described above had such a problem that when intra-frame data were rearranged according to a prescribed speed mode playback the picture quality at a prescribed high speed mode forward direction playback was guaranteed but no good quality specialized playback picture could be obtained in the playbacks at other speeds and in the reverse direction.

According to a first aspect of the present invention, there is provided a variable length code recording apparatus for encoding input video data and recording encoded data on a recording medium with a plurality of tracks, comprising:
high compression means for filtering a data band of said input video data, compressing filtered data at a first compression ratio, and outputting first compression data;
low compression means for compressing said input video data at a second compression ratio lower than said first compression ratio and outputting second compression data;
encoding control means for determining whether a location where said encoded data is to be recorded on said plurality of tracks is appropriate for said first compression data or said second compression data, and outputting a control signal; and
encoding means for outputting said first compression data or said second compression data based upon said control signal.

According to a second aspect of the present invention, there is provided a variable length code recording apparatus for encoding input video data and recording encoded data on a recording medium with a plurality of tracks, comprising:
high compression means for compressing said input video data at a first compression ratio and outputting first compressed data;
low compression means for compressing said first compressed data at a second compression ratio lower than said first compression ratio and outputting a second compressed data;
encoding control means for determining whether a location on said plurality of tracks where said encoded data is to be recorded is appropriate for said first compression data or said second compression data and outputting a control signal; and
encoding means for outputting said first compression data or said second compression data based upon said control signal.

According to a third aspect of the present invention, there is provided a variable length code playback apparatus for playing back encoded data recorded on a recording medium, comprising:
compression determining means for determining if encoded data from a location on said recording medium is compressed at a first compression ratio or at a second compression ratio lower than said first compression ratio and outputting a control signal;
first decoding means for decompressing data compressed at a first compression ratio;
second decoding means for decompressing data compressed at a second compression ratio;
routing means for routing said encoded data to said first decoding means or to said second decoding means based upon said control signal; and
output means for outputting either an output of said first decoding means or an output of said second decoding means based upon said control signal.

According to a fourth aspect of the present invention, there is provided a variable length code playback apparatus for playing back encoded data recorded on a recording medium, comprising:
compression determining means for determining if said encoded data is compressed at a first and a second compression rate or if it is compressed only at a first compression rate and outputting a control signal;
first decoding means for decompressing said encoded data at a first decompression rate and outputting first decoded data;
second decoding means for decompressing said first decoded data and outputting second decoded data; and
output means for outputting either said first decoded data or said second decoded data based upon said control signal.

According to a fifth aspect of the present invention, there is provided a reproducing apparatus for reproducing high efficiency coded signals arranged on tracks of a tape such that positions of predetermined parts of said high efficiency coded signals are cyclically shifted along said tape at a cycle associated with at least one specific high speed reproducing operation of a forward or reverse direction, comprising:
a magnetic playback head; and
means for reproducing said high efficiency coded signals,
wherein said predetermined parts of said high efficiency coded signals have a data compression ratio higher than other parts of said high efficiency coded signals.

For a better understanding of the present invention and many of the attendant advantages thereof reference will now be made by way of example to the accompanying drawings, wherein:
FIGURE 1 is an explanatory diagram for explaining the correspondence of the locations on the frame with the locations on a recording medium in a conventional example;
FIGURE 2 is an explanatory diagram showing the relationship between the tracing pattern and the playback envelop at triple-speed mode playback;
FIGURE 3 an explanatory diagram showing the construction of the recording/playback heads;
FIGURE 4 is an explanatory diagram for explaining the construction of the playback frame in a conventional example;
FIGURE 5 is an explanatory diagram for explaining the compression method according to H.261 recommendation;
FIGURE 6 is a block diagram showing the recording section of conventional variable length code recording/playback apparatus adopting the predictive encoding;
FIGURE 7 is an explanatory diagram for explaining the macro block;
FIGURE 8 is an explanatory diagram showing the data stream of recorded signals in the recorder shown in FIGURE 6;
FIGURE 9 is a block diagram showing the decoding section (the playback section) of a conventional variable length code recording/playback apparatus;
FIGURE 10 is an explanatory diagram for explaining a conventional example in which important data are concentrated in the playback areas in the specialized playback;
FIGURE 11 is an explanatory diagram for explaining the data arrangement in the conventional example shown in FIGURE 10;
FIGURE 12 is a block diagram showing the recording section of the conventional variable length code recording/playback apparatus realizing FIGURE 18;
FIGURE 13 is a block diagram showing the playback section of the conventional variable length code recording/playback apparatus realizing FIGURE 10;
FIGURE 14 is an explanatory diagram for explaining data to be recorded in specific arrangement areas;
FIGURE 15 an explanatory diagram showing correspondence between data and frame in FIGURE 14;
FIGURE 16 is an explanatory diagram for explaining the data stream shown in FIGURE 14;
FIGURE 17 is an explanatory diagram for explaining the recording state when corresponded to the five-times speed mode playback in the conventional examples in FIGURES 12 and 13;
FIGURE 18 is an explanatory diagram for explaining the operations according to the conventional example;
FIGURE 19 is an explanatory diagram for explaining problems according to the conventional example;
FIGURE 20 an explanatory diagram for explaining problems according to the conventional examples;
Figure 21 is a block diagram showing a recording section of the high efficiency coding/decoding apparatus according to the present invention;
Figure 22 is an explanatory diagram for explaining the data compression ratio according to the invention;
Figure 23 is an explanatory diagram for explaining the operation of the apparatus according to the invention;
Figure 24 is a block diagram showing a playback section of the high efficiency coding/decoding apparatus according to the present invention;
Figure 25 is an explanatory diagram for explaining the operation of the apparatus according to the invention;
Figure 26 is a block diagram showing a first modification of the apparatus according to the invention;
Figure 27 is an explanatory diagram for explaining the operation of the first modification of the apparatus according to the invention;
Figure 28 is another explanatory diagram for explaining the operation of the first modification of the apparatus according to the invention;
Figure 29 is a block diagram showing a second modification of the apparatus according to the invention;
Figure 30 is an explanatory diagram for explaining the operation of the second modification of the apparatus according to the invention;
Figure 31 is a block diagram showing a third modification of the apparatus according to the invention;
Figure 32 is a block diagram showing a modification of the recording section of the apparatus according to the invention; and
Figure 33 is a block diagram showing a fourth modification of the playback section of the apparatus according to the invention.

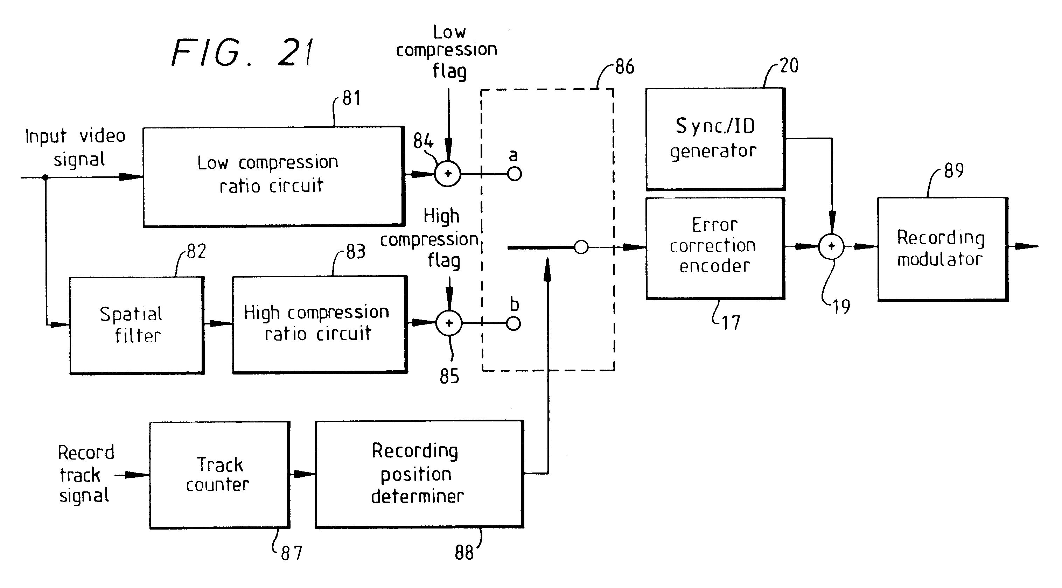

The present invention will be described in detail with reference to the Figures 21 to 33. Throughout the drawings, reference numerals or letters used in Figures 1 through 20 will be used to designate like or equivalent elements for simplicity of explanation.

Figure 21 is a block diagram showing one embodiment of the recording section of a high efficiency encoding/decoding apparatus in accordance with the present invention.

Input video signals are supplied to a low compression ratio circuit 81 and to a high compression ratio circuit 83 through a spatial filter 82. The spatial filter 82 outputs the input video signals by restricting a data band. The low compression ratio processor 81 outputs the input video signals to an adder 84 after compressing them at a relatively low compression ratio, while the high compression ratio processor 83 outputs the input video signals to an adder 85 after compressing them at a relatively large compression ratio.

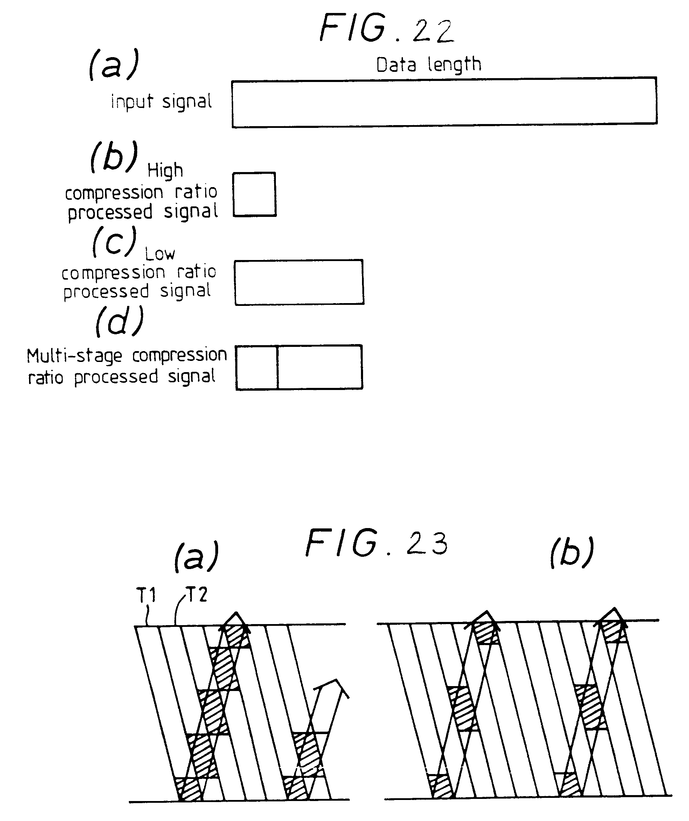

Figure 22 is an explanatory diagram for explaining volumes of output data of the low compression ratio circuit 81 and the high compression ratio circuit 83. Figure 22(a) shows input video signal data volume, Figure 22(b) shows the data length of the high compression ratio processed signal, Figure 22(c) shows the data length of the low compression ratio processed signal and Figure 22(d) shows the data length of a multistage compression ratio processed signal described later. As illustrated in Figures 22(a) to 22(c), data volume of the high compression ratio processed signal is smaller than those of the input signal and low compression ratio processed signal. The adder 84 supplies the low compression ratio processed signal from the low compression ratio circuit 81 to the terminal a of a switch 86 with a low compression flag added. The adder 85 supplies the high compression ratio processed signal from the high compression ratio circuit 83 to the terminal b of the switch 86 with a high compression flag added.

Recording track signals are supplied to a track counter 87. The track counter 87 measures a track number by counting the recording track signals and outputs the measured result to a recording position determination circuit 88. This recording position determination circuit 88 decides recording locations of the output of the low compression ratio circuit 81 and that of the high compression ratio circuit 83 on the recording tracks and outputs a control signal to control the switch 86.

Figure 23 is an explanatory diagram for explaining the recording locations on the tracks by the recording location decision circuit 88. Figure 23 shows tracing patterns at the five-times speed mode playback. In this embodiment, the output data of the high compression ratio circuit 83 are recorded in the playback areas shown by hatching (hereinafter referred to as the specific arrangement areas) in Figure 23. Figure 23(a) shows the highly compressed data in specific arrangement areas on all tracks, while Figure 23(b) shows the highly compressed data in specific arrangement areas provided on every other track.

The switch 86, under the control of the recording position determination circuit 88, selectively outputs the low compression ratio processed signals or the high compression ratio processed signals to the error correction encoder 17. The error correction encoder 17 outputs the received low or high compression ratio processed signals to the adder 19 with an error correction parity added, as described with reference to Figure 6, for example. The sync/ID generator generates a sync signal and an ID signal, and supplies them to the adder 19. The adder 19 outputs the output of the error correction encoder 17 to a recording modulator 89 with the sync and ID signals added. The recording modulator 89 encodes the output of the adder 19 according to the characteristic of a recording medium (not shown) and outputs it to the recording section (not shown).

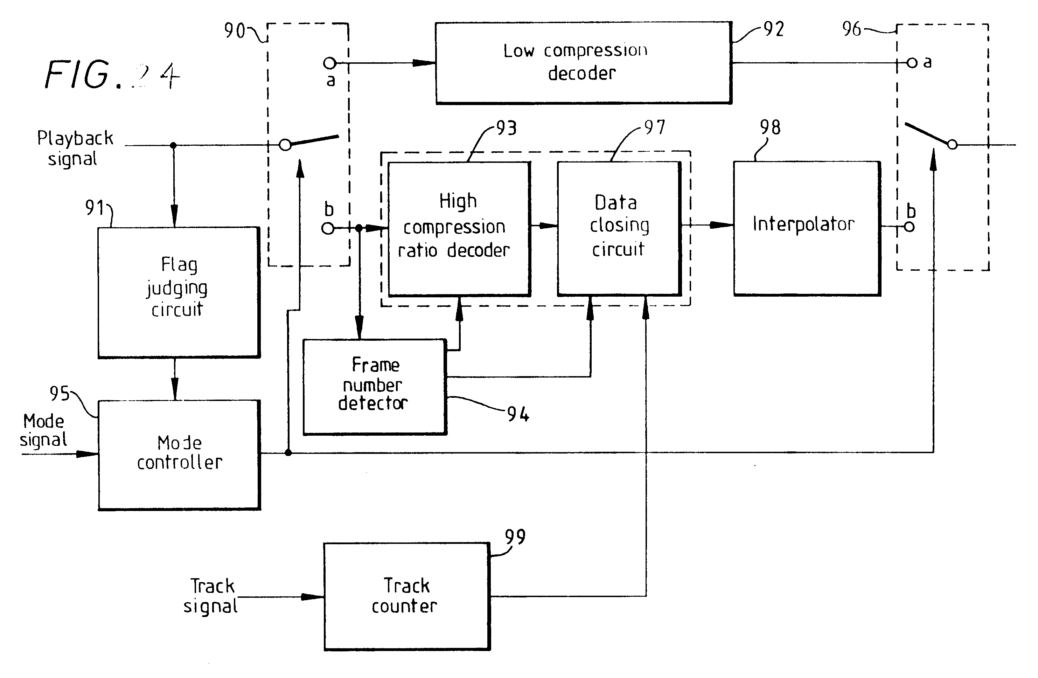

Figure 24 is a block diagram showing a playback section corresponding to the recording section of Figure 21.

The playback signal from a recording medium (not shown) is supplied to a switch 90 and a flag judging circuit 91. The terminal a of the switch 90 is connected to a low compression decoder 92, while the terminal b is connected to a high compression decoder 93 and a frame number detector 94. The flag judging circuit 91 detects the low compression flag or the high compression flag and judges whether the input playback signal has been processed at a low compression ratio or at a high compression ratio, and outputs the judging result to a mode controller 95. The mode controller 95 is also supplied with a mode signal showing a playback mode and controls the changeover of the switch 90 based on the mode signal and the judging result.

The low compression decoder 92 decodes the playback data processed at a low compression ratio, i.e. including data recorded in areas other than the specific arrangement area, and outputs the decoded data to the terminal a of a switch 96. This switch 96 is also controlled by the mode controller 95 in the same way as the switch 90.

The frame number detector 94 detects a track number of the playback signal from the switch 90 and outputs it to the high compression ratio decoder 93. A high compression ratio processed signal is composed of intra-frame data I or inter-frame data B/P. The high compression decoder 93 decodes the playback data processed at a high compression ratio based on the detecting result of the frame number detector 94, and gives the decoded data to a patcher 97.

A track counter 99 counts input track numbers and outputs the counted track numbers to the patcher 97. The patcher 97 has a memory and the read/write of the decoded output of the high compression decoder 93 is controlled based on the track number and frame number, and a plurality of continuous pictures are combined to a single sheet of a picture, which is then output to an interpolator 98.

That is, when a certain speed mode playback is executed, a transmission rate increases corresponding to that playback speed. For instance, decoded outputs for 5 pictures are obtained in the period of one tracing of the head when the five-times speed mode playback is executed. For this reason, one sheet of a picture is constructed from a plurality of pictures by selecting prescribed portions of decoded outputs according to a playback speed in this embodiment. The interpolator 98 interpolates data and outputs them to the terminal b of the switch 96.

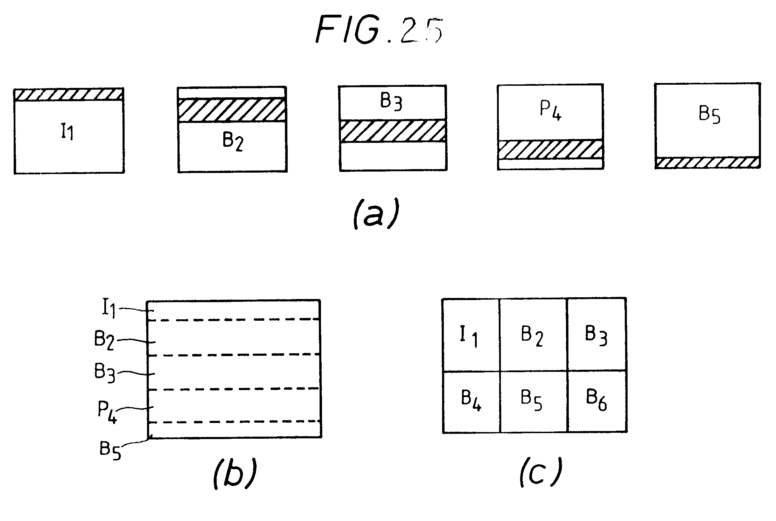

Next, referring to the explanatory diagram shown in Figure 25, the operation of the embodiment constructed as above will be explained. Figure 25(a) shows data which are used for constructing the playback screen out of the playback outputs from track numbers 1 to 5 during five-times speed mode playback, and Figure 25(b) shows the construction of a playback screen. As an alternative, Figure 25(c) shows the construction of a playback screen from six sub-screens from data I1 and B2-B6.

In the recording section, input video signals are supplied to the low compression ratio circuit 81 and also to the high compression ratio circuit 83 after the band restriction by the spatial filter 82. These low compression processed signals are added to a low compression flag in the adder 84 and supplied to the terminal a of the switch 86. The high compression ratio processed signals are supplied to the terminal b of the switch 86 with a high compression flag added in the adder 85.

The track counter 87 counts recording track signals and outputs them to the recording position determination circuit 88. The recording position determination circuit 88 controls the switch 86 based on a track number. For instance, at the track T1 from where the tracing is started as illustrated in Figure 23(a), the recording position determination circuit 88 first forces the switch 86 to select the terminal b at times corresponding to the specific arrangement area, and output the high compression ratio processing signals, and the terminal a at other times, and output the low compression ratio processing signals. In the next track T2, the recording position determination circuit 88 forces the switch 86 to select the terminal a and then the terminal b at times corresponding to the specific arrangement area and output the high compression ratio processing signals. Thereafter, the recording location decision circuit 88 controls the switch 86 in a similar manner to sequentially output the intra-frame data I and the inter-frame data B, B, P, .... and so on.

The output of the switch 86 is added with an error correction parity in the error correction encoder 17 and further, is added to the sync/ID signals in the adder 19, and supplied to the recording modulator 89. The record modulator 89 outputs the output of the adder 19 after modulation to fit to a recording medium.

In the playback section, during normal playback, the mode controller 95 forces the switches 90 and 96 to select the terminal a based on a mode signal and the judging result of the flag judging circuit 91. The playback signal from a recording medium (not shown) is supplied to the low compression decoder 92 through the switch 90. The low compression decoder 92 decodes the playback signal of the data recorded in areas other than the specific arrangement areas of respective recording tracks. This decoded output is output through the switch 96 and displayed on a display section.

During special playback, the mode controller 95 forces the switches 90 and 96 to select the terminal b based on a mode signal and the judging result of the flag judging circuit 91. The high compression decoder 93 executes the decoding based on the detection result of the frame number detector 94. That is, the intra-frame data I and the inter-frame data B, B, P .... are sequentially input to the high compression decoder 93. The high compression decoder 93, after decoding the intra-frame data I, decodes the inter-frame data P using the decoded intra-frame data I and then, decodes the inter-frame data B using the intra-frame data I and the inter-frame data P, and outputs the decoded inter-frame data B to the patcher 97.

When executing the five-times speed mode playback, five sheets of picture data which are played back by one tracing of the head are the intra-frame data I1, the inter-frame data B2, B3, P4 and B5. In order to reduce the transmission rate and to make a picture smooth using a series of 5 sheets of picture data, the patcher 97 generates picture data for one sheet using the intra-frame data I1 and the inter-frame data B2, B3, P4 and B5. That is, as the read-write of decoded data is controlled, the patcher 97 synthesizes one sheet of picture data as shown in Figure 25(b) using the hatched parts of respective data as shown in Figure 25(a). The patcher 97 is also capable of arranging data to compose a screen using respective frame data as illustrated in Figure 25(c), in the case of six-times speed playback. The output of the patcher 97 is given to the interpolator 98, and, after interpolation, it is output through the switch 96.

As described above, in this embodiment high compression ratio processed signals are recorded in the specific arrangement areas during special playback and a picture is composed using a series of picture data sheets corresponding to a playback speed.

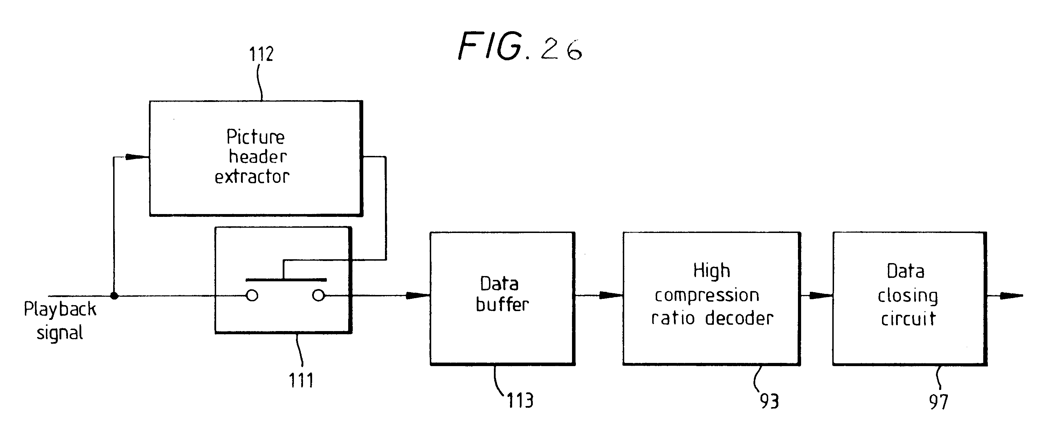

Figure 26 is a block diagram showing the second embodiment of the present invention. In this modification, a selector 111, picture header extractor 112 and data buffer 113 are located ahead of the high compensation ratio decoder 93.

In the embodiment shown in Figure 24, all of the playback data are decoded. By contrast, in this modification only the intra-frame data I and the inter-frame data P are used. The picture header extractor 112 determines whether the input playback signal is intra-frame data I or inter-frame P/B, and controls the selector 111.

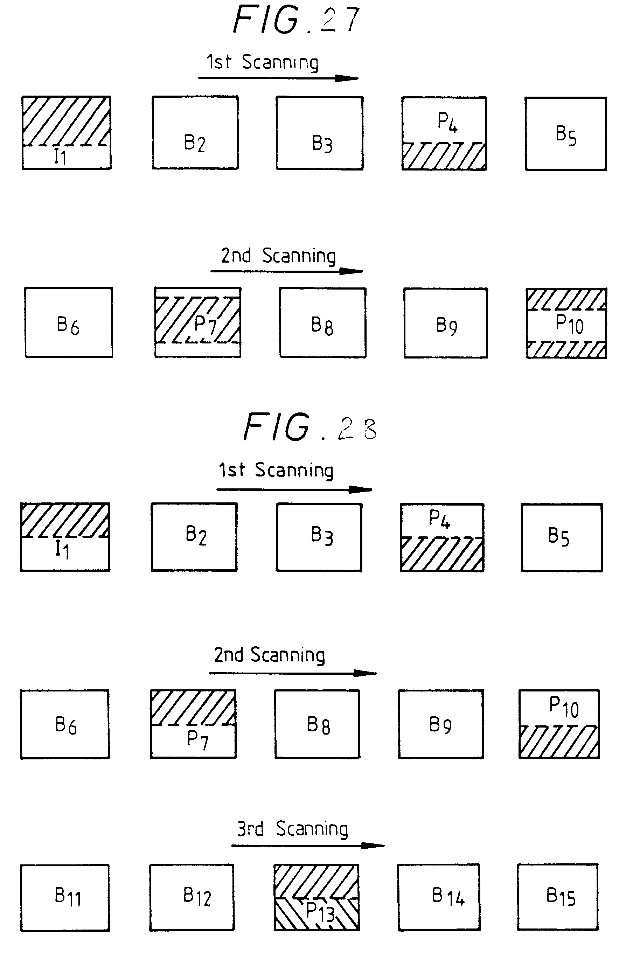

Figures 27 and 28 show with hatching the data which are patched together to form a complete image. During playback, the playback signals are supplied to the switch 111 and the picture header extractor 112. In the first tracing of the head, the intra-frame data I1 passes and then the inter-frame data P4 passes. The data buffer 113 stores input data and supplies them to the high compression decoder 93. After decoding the intra-frame data I1, the high compression decoder 93 decodes the inter-frame data P4 using the decoded intra-frame data I1. The patcher 97 outputs a sheet of picture data using the output of the high compression decoder 93.

In the second tracing, the picture header extractor 112 controls the switch 111 and passes the inter-frame data P7 and the inter-frame data P10 to the data buffer 113 as illustrated in Figure 27. The high compression decoder 93 decodes these data at a high compression ratio, and the patcher 97 outputs one sheet of picture data.

Alternatively, the construction of the playback screen can be made as shown by hatching in Figure 28. Figure 28 shows an example when one sheet of the playback screen was composed using the intra-frame data I1 and the inter-frame data P4 in the first tracing, using the inter-frame data P7 and the inter-frame data P10 in the second tracing, and the inter-frame data P13 only in the third tracing.

As described above, in this modification the playback screen is formed from the intra-frame data I and the inter-frame data P only.

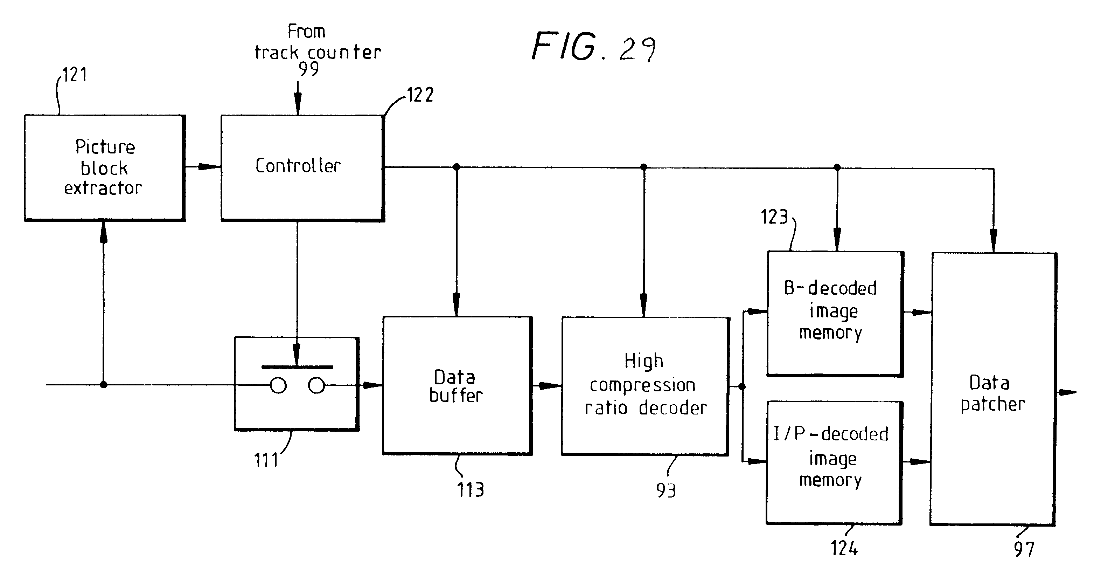

Figure 29 is a block diagram showing a third embodiment of the present invention. In Figure 29, elements the same as those in Figure 26 are assigned the same reference numerals and the explanations thereof are omitted.

The playback signals are input to the data buffer 113 through the switch 111 and to a picture block extractor 121. The picture block extractor 121 identifies whether the playback signals are intra-frame data I, the inter-frame data P, or inter-frame data B, and outputs the result of identification to a controller 122. The controller 122 is supplied with a track number from the track counter 99 (see Figure 24) and outputs a control signal to the switch 111, the data buffer 113, the high compression decoder 93, a B-decoded picture memory 123 and the data patcher 97.

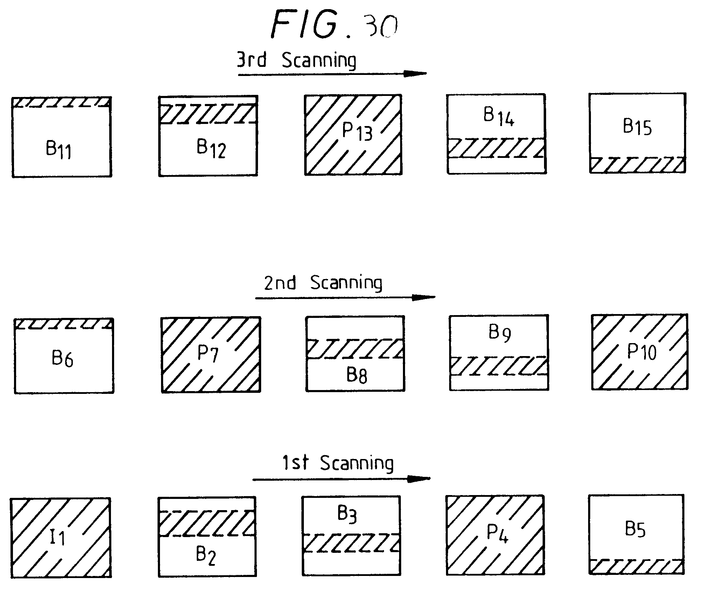

The operation of this embodiment construction will be explained with reference to Figure 29. As shown in Figure 30, in the first tracing, the data patcher circuit 97 composes and outputs one sheet of picture data by reading the intra-frame data 11 corresponding to the uppermost part of the screen and the inter-frame data P4 of the part corresponding to the second part from the bottom of the screen, using data from the I/P decoded picture memory 124, together with the inter-frame data B2, B3 and B5 corresponding to the hatched sections shown in Figure 30, using data from the B decoded picture memory 123.

In the second and third tracings, the data patcher 97 composes one screen using the partially decoded data of the inter-frame data B6, P7, B8, B9 and P10 in the second tracing, and compresses one screen using the partially decoded data of the inter-frame data B11, B12, P13, B14 and B15 in the third tracing.

The controller 122 changes over the switch 111 based on the outputs of the picture block extractor 121 and the track counter 99. The required data are supplied to the data buffer 113 through the switch 111.

The high compression decoder 93 decodes the playback signals from the data buffer 113 according to track numbers, and stores these decoded data in a B-decoded picture memory 123 or, as the case may be, in an I/P decoded picture memory 124.

Thus, as to the inter-frame data B it is not necessary to decode all data but only data for the part to be used for playback of the screen are decoded and, therefore, the processing rate can be lowered.

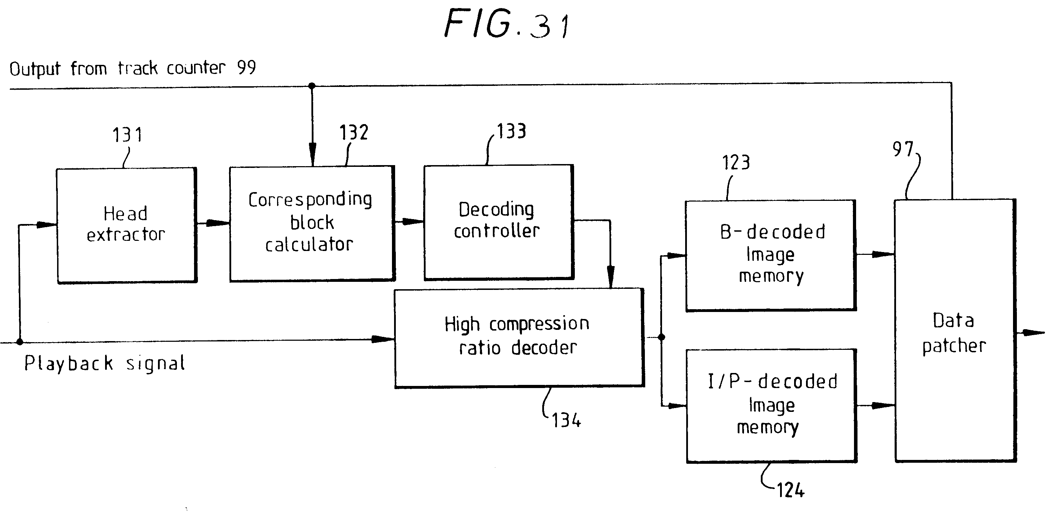

Figure 31 is a block diagram showing a modification of the embodiment illustrated in Figure 29. In Figure 31, the same elements as in Figure 29 are assigned with the same reference numerals and the explanations thereof are omitted.

The playback signals from the terminal b of the switch 90 are supplied to the high compression decoder 93 and a header extractor 131. The header extractor 131 extracts the header from the playback signals and identifies whether the playback signals are the intra-frame data I or the inter-frame data P or the inter-frame data B and outputs the result of the identification to a corresponding block calculator 132. The corresponding block calculator 132 is also supplied with the information on track numbers, and by calculating the block data to be decoded out of the playback data, outputs it to a decoding controller of the playback data, outputs it to a decoding controller 133. The decoding controller 133 controls the operation of a high compression decoder 134 based on the output of the corresponding block calculator 132. Thus, only the data defined by the hatched sections in Figure 30 are decoded.

In the construction described above, the applicable block calculator 132 calculates, for instance, a block to be decoded as shown by hatching in Figure 30 based on the output of the header extractor 131 and the information on track number. Playback signals are sequentially input to the high compression decoder 134 and the decoding controller 133 controls the ON/OFF of the decoding operation according to the output of the corresponding block calculator 132. As a result, the high compression decoder 134 is able to decode only data corresponding to the hatched sections illustrated in Figure 30. All other operations are the same as those shown in Figure 29.

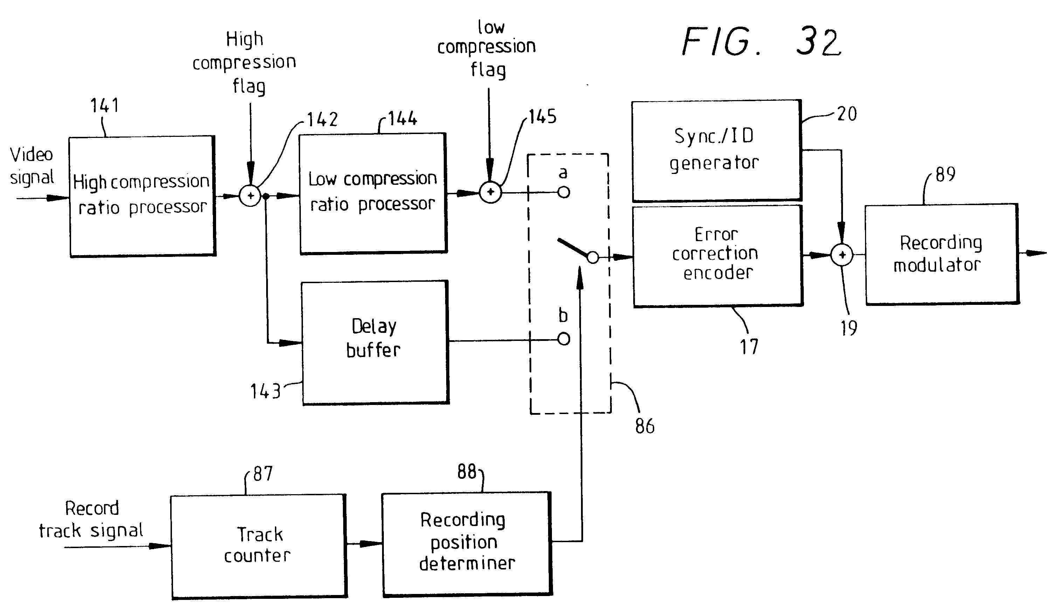

Figure 32 is a block diagram showing the recording section of a further embodiment of this aspect of the present invention. In Figure 32, elements the same as those in Figure 21 are given the same reference numerals and the explanations thereof are omitted. This system performs a multiple stage data compression operation as shown in Figure 22(d).

Input video signals are input to a high compression ratio processor 141. The high compression ratio processor 141 processes the input video signals at a high compression ratio and outputs the signals to an adder 142. The adder 142 outputs the output of the high compression ratio processor 141, with a high compression flag added thereto, to a low compression ratio processor 144 and a delay buffer 143. The low compression ratio processor 144 processes the signals at a low compression ratio, and outputs video data of high quality to an adder 145. The adder 145 adds a low compression flag to the output of the low compression ratio circuit 144 and supplies them to the terminal a of the switch 86. Further, the delay buffer 143 supplies the output of the adder 142, after delaying it, to the terminal b of the switch 86.

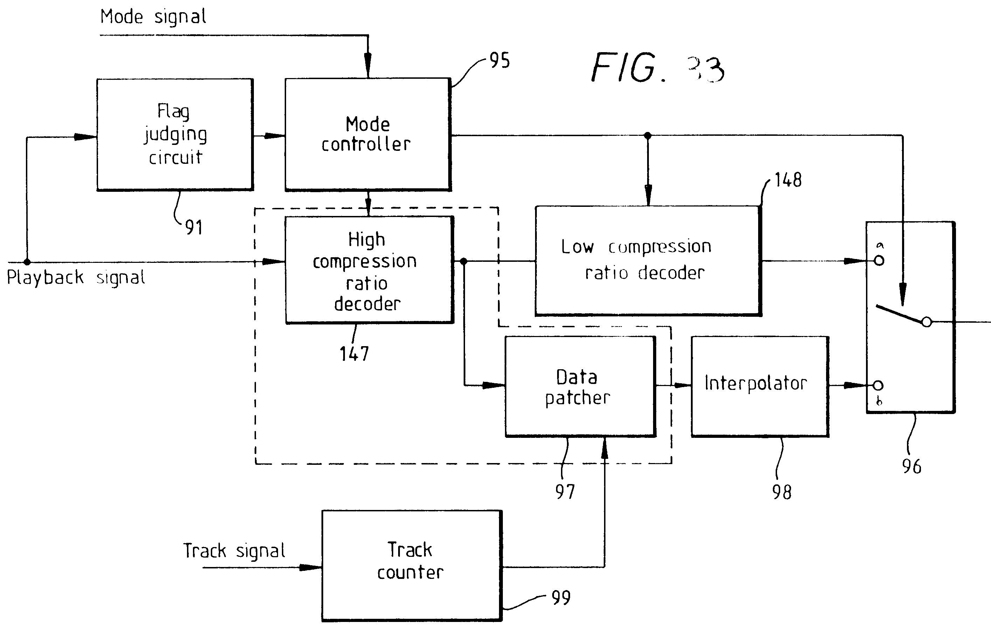

Figure 33 is a block diagram showing an embodiment of the playback section of the multistage encoding system. In Figure 33, elements the same as those in Figure 24 are given the same reference numerals and the explanations thereof are omitted.

The playback signals are given to a high compression ratio decoder 147. Under the control by the mode controller 95, the high compression ratio decoder 147 decodes the signals processed at a high compression ratio out of the playback signals and supplies them to a low compression ratio decoder 148 and the data patcher 97. The low compression ratio decoder 148, under the control of the mode controller 95, decodes the signals processed at a low compression ratio out of the output of the high compression decoder 147 and outputs them to the terminal a of the switch 96.

In the embodiment constructed as above, input video signals are processed at a multistage compression ratio by the high compression ratio circuit 141 and the low compression ratio circuit 144 in the recording section. Figure 22(d) shows the multistage compression ratio processed signals, which are composed of the high compression ratio processed signals and the low compression ratio processed signals. The high compression ratio processed signals are added with a high compression flag in the adder 142 and supplied to the terminal b of the switch 86 through the delay buffer 143. The switch 86, under the control by the recording location decision circuit 88, selects the terminal a at a timing corresponding to the area other than the specific arrangement area in the special playback mode and outputs the multistage compression ratio processed signals, while selecting the terminal b at a timing corresponding to the specific arrangement area, outputs the high compression ratio processed signals. Other operations in the recording section are the same as those in the embodiment shown in Figure 42.

On the other hand, in the playback section, if the special playback mode is specified, the playback data from the specific arrangement area are played back by the high compression decoder 147 and supplied to the data patcher 97. The data patcher 97 generates and outputs one sheet of picture data using data played back from the specific arrangement areas.

In the normal playback mode, the output of the high compression ratio decoder 147 is supplied to the low compression decoder 148 and the low compression ratio processed signals are also decoded. Thus, all data recorded on the tracks are decoded and the decoded data are supplied to the terminal a of the switch 96. Other operations of this embodiment are the same as those in the embodiment shown in Figure 45.

The present invention is not limited to the embodiments described above. For instance, data to be recorded in specific arrangement areas are not limited to DC components of the intra-frame data.

As described above, the present invention can provide an extremely preferable variable length code recording/playback apparatus which has such an effect that the playback picture quality in the playback in the reverse direction playback as well as a plurality of specific speed mode playback can be improved.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and could be defined by claims differing in scope from the following claims, which different claims may be adopted subsequently during prosecution, for example for the purposes of a divisional application.

## Claims

1. A variable length code recording apparatus for encoding input video data and recording encoded data on a recording medium with a plurality of tracks, comprising:
high compression means (82, 83) for filtering a data band of said input video data, compressing filtered data at a first compression ratio, and outputting first compression data;
low compression means (81) for compressing said input video data at a second compression ratio lower than said first compression ratio and outputting second compression data;
encoding control means (88) for determining whether a location where said encoded data is to be recorded on said plurality of tracks is appropriate for said first compression data or said second compression data, and outputting a control signal; and
encoding means (17) for outputting said first compression data or said second compression data based upon said control signal.

2. A variable length code recording apparatus for encoding input video data and recording encoded data on a recording medium with a plurality of tracks, comprising:
high compression means (141) for compressing said input video data at a first compression ratio and outputting first compressed data;
low compression means (144) for compressing said first compressed data at a second compression ratio lower than said first compression ratio and outputting a second compressed data;
encoding control means (88) for determining whether a location on said plurality of tracks where said encoded data is to be recorded is appropriate for said first compression data or said second compression data and outputting a control signal; and
encoding means (17) for outputting said first compression data or said second compression data based upon said control signal.

3. A variable length code playback apparatus for playing back encoded data recorded on a recording medium, comprising:
compression determining means (91, 95) for determining if encoded data from a location on said recording medium is compressed at a first compression ratio or at a second compression ratio lower than said first compression ratio and outputting a control signal;
first decoding means (93) for decompressing data compressed at a first compression ratio;
second decoding means (92) for decompressing data compressed at a second compression ratio;
routing means (90) for routing said encoded data to said first decoding means or to said second decoding means based upon said control signal; and
output means (96) for outputting either an output of said first decoding means or an output of said second decoding means based upon said control signal.

4. A variable length code playback apparatus as claimed in claim 3, wherein said compression determining means comprises a flag judging circuit (91).

5. A variable length code playback apparatus as claimed in claim 3, wherein said compression determining means comprises a picture header extractor (112).

6. A variable length code playback apparatus as claimed in claim 3, wherein said first decoding means comprises a B-decoded image memory means (123) for storing B-decoded images, an I/P-decoded image memory means (124) for storing I/P-decoded images and a data patching means (97) for patching an output from either said B-decoded image memory means or said I/P-decoded image memory means to said output means.

7. A variable length code playback apparatus as claimed in claim 6, wherein said compression detection means comprises a picture block extractor (121).

8. A variable length code playback apparatus as claimed in claim 6, wherein said compression detection means comprises a header extractor (131) and a corresponding block calculator (132).

9. A variable length code playback apparatus for playing back encoded data recorded on a recording medium, comprising:
compression determining means (88) for determining if said encoded data is compressed at a first and a second compression rate or if it is compressed only at a first compression rate and outputting a control signal;
first decoding means (141) for decompressing said encoded data at a first decompression rate and outputting first decoded data;
second decoding means (144) for decompressing said first decoded data and outputting second decoded data; and
output means (86) for outputting either said first decoded data or said second decoded data based upon said control signal.

10. A reproducing apparatus for reproducing high efficiency coded signals arranged on tracks of a tape such that positions of predetermined parts of said high efficiency coded signals are cyclically shifted along said tape at a cycle associated with at least one specific high speed reproducing operation of a forward or reverse direction, comprising:
a magnetic playback head; and
means for reproducing said high efficiency coded signals,
wherein said predetermined parts of said high efficiency coded signals have a data compression ratio higher than other parts of said high efficiency coded signals.
